# EUROPEAN PATENT APPLICATION

(11) **EP 0 869 357 A1**
(43) Date of publication of application: **07.10.1998**
(21) Application number: 97940167.6
(22) Date of filing: 18.09.1997
(51) Int. Cl.: G01N 27/60

(54) **SYSTEM AND METHOD FOR MEASURING THE ZETA POTENTIAL OF SUSPENSIONS OF PARTICLES**

(30) Priority: 20.09.1996 ES 9601992
(71) Applicant: UNIVERSIDAD COMPLUTENSE DE MADRID, E-28040 Madrid (ES)
(72) Inventor: TIJERO MIQUEL, Julio Facultad Ciencias Quimicas, E-28040 Madrid (ES); NEGRO ALVAREZ, Carlos Facultad Ciencias Quimicas, E-28040 Madrid (ES); BLANCO SUAREZ, Maria Angeles, E-28040 Madrid (ES); MONTE LARA, Concepcion Facultad Ciencias Quimicas, E-28040 Madrid (ES)
(74) Representative: Carpintero Lopez, Francisco
(86) International application number: ES9700228
(87) International publication number: WO9812551

(57) **Abstract**

The invention relates to a system for measuring the zeta potential of suspensions of particles as well as to a method for measuring the zeta potential of said suspensions. The invention comprises a porous medium (2), a movable sealed part (3) joined to a rotation mechanism (4) connected to a regulator device (5). In the pipe (1) are introduced two electrodes (6) connected to a signal processing (8) and amplifying (7) means, and a device (9) for measuring the charge loss. In such a way, when the suspension of particles circulates through the conduit, a fibre cake is formed on the porous medium whereby it is possible to determine the current potential and the charge loss generated. Once the measurement has been carried out, the porous medium is rotated so that the clarified solution entrains the cake formed, while a new measurement is taken. This system is particularly useful to study, inter alia, paper suspensions.

## Description

### OBJECT OF THE INVENTION

The invention relates to a system for measuring the zeta potential of a suspension of particles and a method for measuring the zeta potential of suspensions of particles using such a system.

### BACKGROUND OF THE INVENTION

Most solids develop a charge on their surface on being inserted in a polar medium, either by ionisation, by specific adsorption or by ion dissolution. The electric charge of colloid or suspended particles causes a repulsion between them and prevents them from joining to form agglomerates of particles, in turn attracting opposite charge ions. Along with the tendency to mix together due to thermal type movements, this results in the formation of a double electric layer. If one of the phases moves at a tangent to the other, so-called electrokinetic phenomena may follow.

The importance of studying the electric surface charge of colloid or suspended particles lies mainly in the correlation established at the turn of the century between electrokinetic phenomena and the stability of colloids. The characterisation of the electric charge of particles is therefore an element to bear in mind in all processes in which particle coagulation and flocculation phenomena are important.

For instance, in the case of paper and cardboard manufacture, to be precise, the paper with which the machine is fed is a suspension of charged particles such as cellulose fibres, fines, mineral charges and additives, the preferred interactions of which determine the efficiency and operativeness of the chemical processes of the wet end of the paper machine. These interactions affect the retention, drainage and formation phenomena that occur during paper or cardboard manufacture and thus also influence the productivity of the machine, as they do the quality of the end product. Determining the charge of pulp suspensions is hence of the essence in the papermaking industry.

The methods for measuring the electric charge of colloid or suspension systems are based on either determining the charge demand or determining the zeta potential (K. Ueno and K. Kina, J. Chem. Ed. 62(7):627, 1985; P.A. Patton and D.T. Lee, Tappi J. 76(8):107-115, 1993; M.A. Blanco, C. Negro, A. Hooimeijer and J. Tijero, Appita 49(2):113-116, 1996).

Traditional methods for determining charge demand are colloid titration methods which are based on the stoichiometric neutralisation of the surface charges of colloid or suspended particles. The results obtained are however not representative of colloid interconnections that take place in paper pulp suspensions when the medium presents a high ionic force or when the flocculation mechanism is not a neutralisation mechanism (L. Bley, Paper Technol. April 1992; D.T. Lee and P.A. Patton, TAPPI Papermakers Conference Proceedings, p.555, 1993). When the additive control is made based upon the results obtained in colloid titration, the working hypothesis is that the optimum additive dosage lies at the isoelectric point of the sample. This hypothesis is not fulfilled in the aforesaid cases, i.e. when the ionic force of the medium is high or when the flocculation mechanism is by formation of charged patches or bridges (D. Eklund and T. Lindstrom, Paper Chemistry. An Introduction, DT Paper Science Publications, Finland, 1991; J.C. Roberts, Paper Chemistry, Chapman & Hall, New York, 1991; M.A. Blanco, Papermaking Flocculation Study. Doctoral thesis, Complutense University, 1994).

The zeta potential can in turn be calculated using theoretical equations, based on electrokinetic data obtained by test electrophoresis, electroosmosis, current potential or sedimentation potential techniques, the principles of which have been known for over forty years, as noted in the cited general electrokinetic method reviews (S.S. Dukhin and B.V. Deryaguin, Electro-Kinetic phenomena. In "Surface and Colloid Science" Vol. 7, Ed. John Wiley, New York, 1974; R.J. Hunter, "Zeta potential in colloid science. Principles and applications" Academic Press, London 1988; E. Strazdins, Tappi J. 78(8):115, 1995).

Most of the test electrokinetic methods described in scientific bibliography however are either not applicable in line or are only valid for diluted samples of fines and mineral charges, which does not represent the performance of the pulp suspension as a whole. This is for instance the case of microelectrophoresis methods in which the zeta potential is determined based upon the electrophoretic mobility of the suspended particles of diluted samples; of laboratory methods for determining the zeta potential based upon the sedimentation potential; and of methods based upon the use of current potential detectors which, together with a colloid titrator, determined the isoelectric point of a small fraction of the sample. In the latter case, the zeta potential is calculated based upon the current potential originating between two electrodes located on the wall of a pipe containing the sample, when a cylinder is reciprocated within the pipe (Jacobasch, H.J., Baubock, G., Schurz, J., Colloid and Polymer Science 263(3):24, 1985; R. Gratton and P. Pruszynski, Pulp and Paper Canada 96(3):73, 1995).

Electrokinetic equipment currently used in line for determining the surface charge of the particles in a paper pulp suspension are based upon determining the current potential generated between two electrodes when a fibre cake is formed on a filtering medium, through which the sample solution is made to flow. The limitations of such equipment lie in having an intermittent flow of the suspension of fibres and the need for a cleaning sequence after each measurement is taken, using an auxiliary fluid. In this equipment, the measurement sequence requires a succession of actions on valves, pistons or other mechanical elements, the control, regulation, use and maintenance of which is delicate, cumbersome and requires a high handling expertise (M. Crill, Pulp and Paper 65(11):92, 1991; J.G. Penniman, Tappi J. 75(8):111, 1992; B.A. Nazir and F. Michel, Revue ATIP, 47(2), 1993; T. Miyanishi, Tappi J. 78(3):85, 1995).

Papermaking conditions however require an in-line, continuous measurement of the electrokinetic parameters required to calculate the zeta potential values of the pulp suspension. The operators of the paper machine also demand a simple method that is easy to handle, automatic and allows the process to be optimised at the least possible cost.

This invention therefore provides a system for measuring the zeta potential of suspended particles which overcomes the above-mentioned drawbacks. In particular, the invention provides a system for measuring the zeta potential, which may work in line and with a continuous flow of the suspension of particles, and which may be applied to paper pulp suspensions. A measurement is thus taken on a representative sample which is neither diluted nor altered, nor indeed split by manipulation or carriage to a place other than the processing point, using simple and reliable equipment capable of fitting in the factory environment, and capable of industrial application in both the papermaking industry and in other industries in which similar suspensions are used in which the zeta potential must be determined.

A further object of this invention is a method for measuring the zeta potential of suspensions of particles comprising the use of such a system.

### DETAILED DESCRIPTION OF THE INVENTION

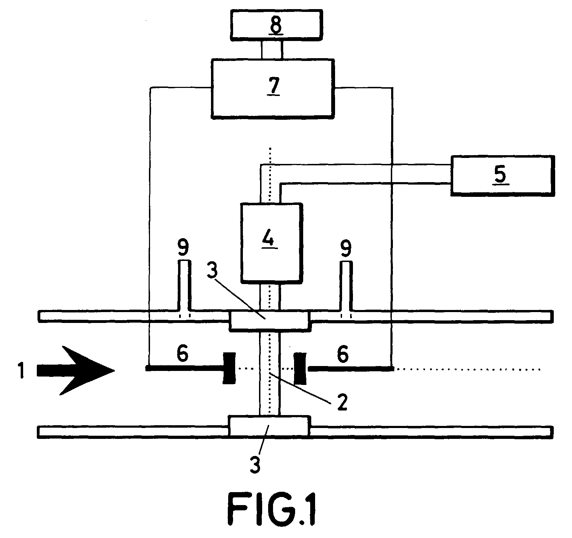

The system for measuring the zeta potential of suspended particles will now be described with reference to Figure 1 attached hereto.

It will be observed that the invention comprises a porous medium (2) operatively joined to a sealed movable part (3) located within a pipe or conduit (1), that is in turn connected to a rotation mechanism (4) which causes said part (3) and hence the porous medium (2) to rotate, and which is operatively connected to a regulator device (5). Two electrodes (6) are inserted in the pipe or conduit (1), located on either side of the porous medium (2) and connected to a signal processing (8) and amplifying (7) means; and a device for measuring the charge loss between two points (9) of the pipe or conduit (1), located on either side of the porous medium (2).

The porous medium (2) comprises a filter, namely a commercial sintered glass filter of the kind commonly designated with numbers 1 to 4, depending on the particle distribution and on the concentration of the suspension. Polymeric filtering materials, such as filtering polythene, polypropylene, polyaramid filtering fabrics, of the kind commonly used in industry for filtering gases or liquids, can also be used. Said medium is mounted on the sealed movable part (3).

The object of the sealed movable part (3) is to serve as a support for the porous medium (2) and at the same time allow it to turn, and it is provided with a rod having a mechanical seal or packing through which it prevents the liquid flowing through the conduit from being lost. This rod is mechanically coupled to the rotation device. This part is so arranged within the conduit that when it is positioned crosswise, there is no fluid flow between this part and the conduit, and therefore when the movable part is located crosswise, all the ensuing liquid flow circulates through the porous medium (2).

The rotation mechanism (4) used is an electric servomotor which is provided with cam contacts which allow the movable sealed part (3) and the porous medium (2) altogether to make 180° turns when the servomotor is actuated by the regulator device (5). A pneumatic or hydraulic or one of the so-called actuator servomotors, which may in turn be electric, pneumatic or hydraulic, of the kind commonly used in the industry or at laboratories to turn valves, can also be used.

The regulator device (5) sends a signal to the rotation mechanism (4) in order for the movable part to rotate. The nature of this signal depends on the device used, and it will therefore act electrically upon a servomotor or will otherwise act indirectly through a solenoid valve when the rotation mechanism (4) is hydraulic or pneumatic. The turning sequence established by the regulator can be dependent on time or on another physical magnitude related to the measured phenomenon. In our case, either a time sequence or a sequence determined by the charge loss or gauge pressure difference, at points (9) of figure 1 located on either side of the porous medium, has been used.

The two electrodes (6) used to measure the generated electric signal, in the specific case hereof, are commercial platinum electrodes of the kind commonly used at laboratories for electrochemical measurements. Metal electrodes of a different kind can nevertheless be used, the only limitation being as derived from their compatibility with the medium.

The signal from the electrodes may optionally be measured with an electrometer or using an amplifying means (7) capable of processing low-level electric signals. A high impedance commercial amplifier has been used in our case for direct current electric signals. The amplifying means (7) is provided with suitable filters to separate the signal from the electrodes from other potential jamming induced by the presence of electric machines, radio-frequency signals, etc.

The signal from the amplifying means (7) can be measured and logged directly with a suitable electrometer and logger or be processed (8) to obtain statistical values. Based upon the direct measurement or the representative statistical value, using a numerical calculator built into the processor, zeta potential values are obtained based upon the Helmholtz-Smoluchowski equation (Hunter R.J., Zeta potential in colloid science. Principles and applications. Academic Press, London 1988).

It is also necessary to measure to charge loss between two points of the conduit (9) located on either side of the porous medium, in such a way that the charge loss created by the cake formed on the filtering medium (2) can be determined. In our particular case, an analogue differential pressure metre has been used whose signal is processed together with the current potential measurement in the processor (8).

Other terms integrating the Helmholtz-Smoluchowski equation, namely temperature, conductivity, viscosity and dielectric constant of the medium, if unknown, are determined by standard laboratory measurements, are measured with sensors whose signal is processed together with the previous data, or are obtained from bibliographic data.

### BRIEF DESCRIPTION OF THE FIGURES

Figure 1 shows a schematic drawing of a system for measuring the zeta potential of suspensions of particles provided by this invention. The reference numerals are explained in the sections making up this specification.

### EMBODIMENT OF THE INVENTION

The preferred embodiment of the invention lies in having a paper pulp suspension flow through a conduit (1) which contains the porous medium (2) that forms part of the system subject of this invention, in such a way that the solution crosses the porous medium while the solids are retained on its surface, forming a cake, the thickness of which may be controlled by controlling the flow crossing the porous medium and/or the measurement time. These conditions may be set depending on the solid concentration of the suspension being measured.

As explained throughout this specification, in other conventional equipment, once the cake is formed, it must be taken from the surface of the porous medium, making the solution flow in the opposite direction and/or using an additional cleaning fluid also flowing in the opposite direction. In the process subject of the invention, however, the clarified solution flowing through the porous medium itself actually cleans the surface of the porous medium, entraining the cake formed, the procedure being as simple as turning the porous medium in such a way that the surface of the medium (A or B) facing the flow of the suspension is inverted from time to time, whereupon the device will be back in a position to take another measurement.

The method for measuring the zeta potential of suspensions of particles with the system subject of this invention therefore comprises:
a) providing a rotation mechanism (4) which causes a sealed movable part (3) connected to the porous medium (2) to rotate, which rotation mechanism (4) is operatively connected to a regulator device (5);
b) supplying the current containing the suspension of particles through a pipe or conduit containing said porous medium (2) within it, connected to said sealed movable part (3), which is in turn connected to said rotation mechanism (4);
c) forming a cake of solids on one of the faces of the porous medium (2);
d) measuring the current potential and the charge loss;
e) rotating the porous medium (2) 180°;
f) detaching the cake formed and cleaning the surface of the porous medium (2) on which said cake shall have been deposited, with the actual current which contains the suspension of particles;
g) forming a cake of solids on the rotated face of the porous medium (2);
h) measuring the current potential and charge loss; and
i) rotating the porous medium (2) 180°.

It follows that when the system works under normal conditions, it measures the current potential generated between two electrodes, located in the measurement cell, upon a cake of solids being formed on a filtering medium located within a pipe, due to the continuous flow of the suspension. The flow of the suspension causes the particles to be deposited on the porous medium while the solution crosses said medium. The particle concentration difference on either side of the porous medium, and the flow of fluid through the particles accumulated on the porous medium result in the surface distribution of the electric charges being changed, yielding a potential difference, which will yield a voltage or current measurement, by suitably processing said electric signal, which is used, along with other system parameters (temperature, conductivity, viscosity, dielectric constant and charge loss) to calculate the zeta potential of the suspension based on the aforesaid theoretical Helmholtz-Smoluchowski equation.

In the preferred application, the current potential is measured in cycles whose length may be optimised according the characteristics of the suspensions, thereby to obtain a stable, representative measurement of the zeta potential at regular time intervals, the length of which is sufficiently short in order to consider that the measurement is virtually continuous.

Unlike current equipment designed for analogous applications, in which the suspension flow needs to be inverted to clean the cake formed, in the system of the invention, it is the porous element that inverts its position at given intervals, and is cleaned with the very solution it filters, which means that the continuous flow of the suspension of particles is maintained. The use of auxiliary fluids to clean the porous medium, as used in current equipment, is thus also avoided.

The values obtained with the system subject of the invention can be used for an in-line control of coagulation-flocculation processes of suspensions of particles so requiring. Noteworthy, for instance, is the chemical control of the wet end of the paper machine in order to optimise the dosage of retention and drainage additives. This results in both the papermaking process and the quality of the end product being enhanced.

Although the main object of the invention is to measure the zeta potential of the aforesaid suspensions, the process is equally valid to characterise the performance of any other system of suspended particles requiring the zeta potential to be measured.

Reference might as a non-limitative example be made to characterising the performance of waste water containing dispersion matter, and controlling the addition of reagents in physical-chemical coagulation-flocculation processes in treating such waste water. It can also be used to characterise the surface charges of pigment, polymer and finely divided mineral dispersions in processes for preparing paints and dispersions, mineral concentration treatments such as flotation and, generally, in any processes in which characterising the surface charge of solid particles or dispersions in conducting liquids may be useful.

The invention also provides a method for measuring the zeta potential of suspensions of particles comprising the use of the aforesaid system.

## Claims

1. A system for measuring the zeta potential of suspensions of particles, characterised by comprising:
- a pipe or conduit (1) through which the particles flow,
- a porous medium (2) operatively connected to a sealed movable part (3) that is in turn connected to a rotation mechanism (4) which causes said part (3) and therefore the porous medium (2) to rotate, operatively connected to a regulator device;
- electrodes (6) located on either side of the porous medium (2) and connected to a signal amplifying (7) and processing (8) means; and
- a device for measuring the charge loss between two points (9) located on either side of the porous medium (2).

2. A system for measuring the zeta potential of suspensions of particles, as in claim 1, characterised in that the porous medium (2) consists of a filter suited to the size distribution of the particles present in the suspensions that are to be studied.

3. A system for measuring the zeta potential of suspensions of particles, as in claim 1, characterised in that the rotation mechanism (4) comprises means recognising the signal from the regulator device (5) and means causing the sealed movable part (3) to turn about a given angle, in reply to the signal from the regulator device (5).

4. A system for measuring the zeta potential of suspensions of particles, as in claim 3, characterised in that the rotation mechanism (4) of the device causes the sealed movable part (3) and the porous medium (2) to rotate 180°.

5. A system for measuring the zeta potential of suspensions of particles, as in claim 1, characterised in that the electrodes consist of a metal compatible with the medium in which the suspension lies.

6. A system for measuring the zeta potential of suspensions of particles, as in claim 1, characterised in that the signal from the electrodes is submitted to a specific processing by amplifying means of logging meters or processors.

7. A method for measuring the zeta potential of a suspension of particles, comprising the use of a system for measuring zeta potential as in claims 1 to 6.

8. A method for measuring the zeta potential of suspensions of particles, as in claim 7, characterised by using a system including a porous medium located within a pipe or conduit, electrodes and charge loss meters located on either side of said porous medium, said method comprising the following steps:
a) providing a rotation mechanism (4) which causes a sealed movable part (3) connected to the porous medium (2) to rotate, which rotation mechanism (4) is operatively connected to a regulator device (5);
b) supplying the current containing the suspension of particles through a pipe or conduit containing said porous medium (2) within it, connected to said sealed movable part (3), which is in turn connected to said rotation mechanism (4);
c) forming a cake of solids on one of the faces of the porous medium (2);
d) measuring the current potential and the charge loss;
e) rotating the porous medium (2) 180°;
f) detaching the cake formed and cleaning the surface of the porous medium (2) on which said cake shall have been deposited, with the actual current which contains the suspension of particles;
g) forming a cake of solids on the rotated face of the porous medium (2);
h) measuring the current potential and charge loss; and
i) rotating the porous medium (2) 180°.

9. A method for measuring the zeta potential of suspensions of particles, as in claim 8, characterised in that the supply of the current containing the suspension of particles is made continuously.
